# EUROPÄISCHE PATENTSCHRIFT

(11) **EP 0 730 273 B1**
(45) Veröffentlichungstag und Bekanntmachung des Hinweises auf die Patenterteilung: **08.05.2002**
(21) Anmeldenummer: 96102412.2
(22) Anmeldetag: 17.02.1996
(51) Int. Cl.: G11B 20/20, G11B 5/008

(54) **Aufzeichnungsverfahren für digitale Magnetbandrecorder**
Recording method for digital magnetic tape recorder
Méthode d'enregistrement pour enregistreur numérique à bande magnétique

(30) Priorität: 28.02.1995 DE 19506818
(43) Veröffentlichungstag der Anmeldung: 04.09.1996
(73) Patentinhaber: DEUTSCHE THOMSON-BRANDT GMBH, 78048 Villingen-Schwenningen (DE)
(72) Erfinder: Kaaden, Jürgen, 78052 Villingen-Schwenningen (DE)
(74) Vertreter: Hartnack, Wolfgang, Dipl.-Ing.

(56) Entgegenhaltungen:
- EP-A- 0 135 886
- DE-A- 3 629 481
- US-A- 4 211 997
- IBM TECHNICAL DISCLOSURE BULLETIN, Bd. 10, Nr. 1, Juni 1967, NEW YORK, US, Seiten 37-39, XP002003805 ANONYMOUS: "Deskewing System for Parallel Recorded Data. June 1967."

## Beschreibung

Die Erfindung geht aus von einem Aufzeichnungsverfahren für digitale Magnetbandrecorder gemäß dem Oberbegriff des Anspruchs 1. Um bei digitalen Magnetbandaufzeichnungssystemen die aufzuzeichnende Datenmenge bewältigen zu können, ist es bekannt, Techniken wie Spurbreitenreduktion, Relativgeschwindigkeitserhöhung, Bitlängenreduktion sowie die Aufteilung der Datenmenge auf mehrere parallel arbeitende Kanäle anzuwenden.

Da die Daten bei Parallel-Aufzeichnung gleichzeitig zur Verfügung stehen müssen, jedoch wegen des geometrisch notwendigen Abstandes der Köpfe diese nacheinander in das Band eintauchen und damit ein zeitlich gestaffeltes Schreiben bzw Lesen erfolgt, müssen die jeweiligen Daten zwischengespeichert werden.

Hierfür ist bei der Datenaufzeichnung eine Verzögerungsstufe im nachlaufenden Kanal vorgesehen, die das Signal für die Zeitdauer vom Eintauchen des ersten Kopfes bis zum Eintauchen des zweiten Kopfes zwischenspeichern kann.

Bei der Wiedergabe ist eine Kanalverzögerung im vorlaufenden Kanal vorgesehen, damit die Daten dieses Kanals zeitgleich mit denen des nachlaufenden Kanales zur Verfügung stehen.

Die Speicherzeit ist abhängig vom Kopfabstand (gerätebedingt) und von der Taktrate (systembedingt). Bei Geräten nach dem Stand der Technik wird die Verzögerung z.B. als FiFo (First-in-Firstout) Speicher realisiert, dessen Tiefe ein wenig größer ist als maximal notwendig. Durch eine Programmierung wird die jeweils benötigte Speichertiefe in Abhängigkeit von der aktuellen Kopfposition gesetzt. Sie kann von Gerät zu Gerät unterschiedlich sein.

Zusammengehörige Köpfe eines Kanals tauchen alternierend in das Band ein, wobei durch einen Umschlingungswinkel >180° eine Leseüberlappung erreicht wird. Jeder Kopf verfügt über seinen eigenen Leseverstärker, wobei der jeweils relevante Ausgang durch das sogenannte Kopfschaltsignal ausgewählt wird. Dieses Signal wird an der Kopftrommel erzeugt, indem durch optische oder magnetische Gebersysteme ein Lagenimpuls pro Kopftrommelumdrehung generiert wird.

In Geräten nach dem Stand der Technik wird diese Lagengeberinformation einem Kopftrommelregelsystem zugeführt, das daraus ein mäanderförmiges Umschaltsignal pro Kopftrommelumdrehung erzeugt, dessen Flankenwechsel exakt mit dem Eintauchen der Köpfe koinzidieren. Nachteilig hierbei ist, daß mit jedem zusätzlichen Kopf ein zeitlich passendes Signal erzeugt werden muß.

Der Erfindung liegt die Aufgabe zugrunde, ein vereinfachtes Verfahren zur zeitlichen Synchronisation mehrerer Signale zu schaffen. Diese Aufgabe wird durch die im Anspruch 1 angegebenen Merkmale der Erfindung gelöst. Vorteilhafte Weiterbildungen der Erfindung sind in den Unteransprüchen angegeben.

Bei dem erfindungsgemäßen Aufzeichnungsverfahren wird die Verzögerungszeit zwischen den Signalen verschiedener Köpfe ermittelt und deren Wert zur zeitlichen Korrektur beim Lesen und Schreiben der verschiedenen Kanäle verwendet.
Die Eingabe dieses Zeitwertes kann neben einem manuellen Verfahren durch einen automatischen Ablauf erfolgen, wonach die relevanten Informationen wie Kopfschaltposition und Kanalverzögerung quasi selbsttätig richtig gesetzt werden.

Die erfindungsgemäße Lösung ist in dem Mikrocontrollersystem realisiert, das auch die Drehzahl- und Phasenregelung der Kopftrommel beinhaltet, sowie die Erzeugung der Kopfschaltsignale. Die zeitliche Verzögerung der Kopfschaltsignale beider Kanäle, die sich aus dem geometrischen Abstand der Köpfe zueinander ergibt, wird als Ausgabewert für die Signalverzögerung benutzt. Es besteht damit eine feste Kopplung der Kopfschaltsignalverzögerung zu der Signalverzögerung. Wird z.B. durch eine veränderte Kopfgeometrie oder durch Einbau einer Kopftrommel mit anders eingestellten Köpfen der Kopfabstand verändert, so wird einfach durch Eingabe eines neuen Schaltzeitpunktes das gesamte Zeitschema angepaßt.

Die Einstellung erfolgt bei der Wiedergabe eines normgerecht aufgezeichneten Bandes durch Setzen der Verzögerung 1 und der Verzögerung 2 zwischen den Kopfschaltsignalen 1 und 2. Hierbei wird bei einer Ausführungsform der Erfindung für die Einstellung ein Zähler gesetzt, der auf Knopfdruck so lange aufbzw. abwärts zählt, bis die richtige Lage vorliegt. Der Zählerwert wird abgespeichert und danach immer wieder verwendet.

Die Einstellung kann bei einer anderen Ausführungsform der Erfindung automatisch erfolgen, wenn ein vorbestimmter Signalwechsel stattfindet oder ein vorbestimmtes Signalschema auftritt. Hierfür wird an einem Eingang des Mikrocontrollers das zeitliche Auftreten eines dieser Ereignisse im Vergleich zu dem des Kopfschaltsignales festgestellt, mit einem Sollwert verglichen und die Verzögerungen entsprechend gesetzt, und die Werte danach abgespeichert.

Diese Messung wird erfindungsgemäß in jedem der Wiedergabekanäle nacheinander oder getrennt voneinander stattfinden. Sie kann jedoch in einer anderen Ausgestaltung der Erfindung auch nur im vorlaufenden Kanal durchgeführt werden, wobei der nachlaufende Kanal gerätespezifisch gesetzt wird. Eine Messung im nachlaufenden Kanal mit Beeinflussung des vorlaufenden Kanales ist ebenfalls möglich.

Ein erfindungsgemäßes Schrägspurmagnetbandaufzeichnungs- und Wiedergabegerät ist mit mehreren parallelen Aufzeichnungskanälen und zugehörigen Schreib-/Leseköpfen mit geometrischem Versatz zueinander, zugehörigen Kopfverstärkern, einer Kopf-Schaltsignal-Generatoreinrichtung zur Erzeugung der Kopfschaltsignale der verschiedenen Kanäle, einer Verzögerungseinheit zur Zeitkorrelationskorrektur der Signale der verschiedenen Kanäle zueinander, und einer Signaldetektionseinrichtung ausgestattet.

Die Kanalverzögerungswerte und Kopfschaltsignalschaltpunkte werden von einer Kontrolleinheit miteinander korreliert.

Die Kontrolleinheit nimmt die Erzeugung der Kopfschaltsignale und die Steuerung der Verzögerungseinheit bei Aufnahme und Wiedergabe vor. Bei der Aufzeichnung und bei der Wiedergabe werden unterschiedliche Kanäle verzögert, wobei das Maß der Verzögerung bei Aufnahme und Wiedergabe identisch ist.

Die Werte für die Verzögerung werden in einem manuellen gesteuerten Meßvorgang bei Wiedergabe eines Referenzbandes ermittelt. Die Werte für die Verzögerung werden alternativ automatisch durch Zeitmessung der in den Referenzsignalen der verschiedenen Kanäle enthaltenen Signale und/oder Signalübergänge bei Wiedergabe eines Referenzbandes gewonnen. Aus den gemessenen Werten der Kanalverzögerungen werden die Kopfschaltsignalpositionen ermittelt.

Aus mechanisch oder elektrisch ermittelten Kopfschaltsignalpositionen wird die benötigte Kanalverzögerung errechnet. Die Werte werden gespeichert und bei nachfolgenden Aufnahme-/Wiedergabevorgängen genutzt.Die Verzögerungseinheiten werden seriell gesteuert, und die Kontrolleinheit ist ein Microcontroller.

Die Erfindung wird im folgenden anhand der Zeichnung erläutert. Darin zeigen
- Fig. 1: die Kopftrommel mit Kopftrommelanordnung,
- Fig. 2: das Signalschema der Datensignale des Kopfes 1 bzw. des Kopfes 2 und
- Fig. 3: Signalverläufe zur Erläuterung der Wirkungsweise.

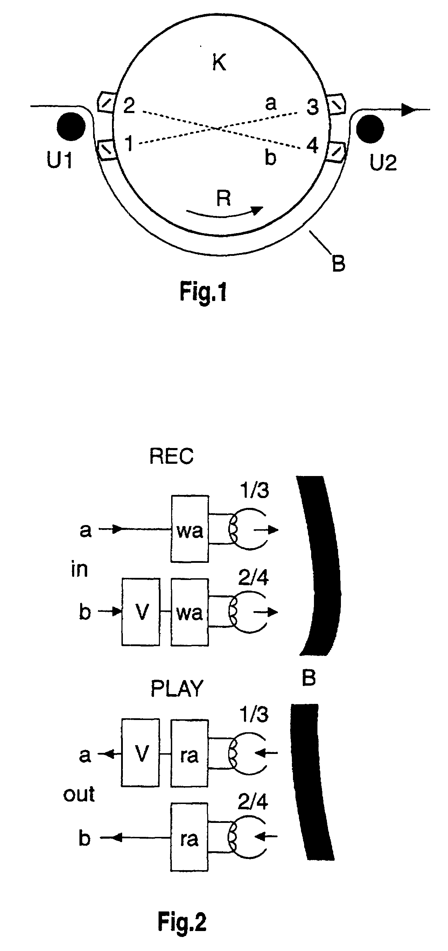

Fig. 1 zeigt die Kopftrommel K mit den Köpfen 1, 2, 3, 4. Die Köpfe 1 und 3 bilden einen Kanal a, und die Köpfe 2 und 4 bilden den Kanal b. Deutlich ist der räumliche Versatz der Köpfe des a-Kanales zu denen des b-Kanales zu erkennen, der durch die geometrischen Abmessungen der Köpfe bedingt ist und bei günstiger Anordnung einen Minimalwert von 500µm erreichen kann.

Die gezeigte Rotationsrichtung R ist in allen Betriebsarten gleich, so daß die Köpfe des Kanals a gegenüber denen des Kanals b immer etwas früher Band-/Kopfkontakt aufweisen. Das Band B wird im Aufnahmebetrieb in der angegebenen Richtung transportiert. Die Umlenkrollen U1 und U2 führen das Band B.

Fig. 2 stellt den prinzipiellen Aufbau der Aufnahme- bzw. Wiedergabeschaltung dar. Fig. 2 zeigt im oberen Teil den Aufnahmebereich rec, im unteren Bereich den Wiedergabebereich play, die Kanäle a und b, die Dateneingänge in und Datenausgänge out, Schreibverstärker wa, Leseverstärker ra, die Köpfe 1/3, 2/4, das Band B und die Verzögerungseinheit V. Das Dateneingangssignal a gelangt über den Schreibverstärker wa während der Aufnahme rec zu den Köpfen 1/3 und wird auf dem Magnetband B aufgezeichnet. Das Dateneingangssignal b gelangt über die Verzögerungseinheit V zu dem Schreibverstärker wa und wird mit Hilfe der Köpfe 2/4 auf dem Band B aufgezeichnet. Bei der Wiedergabe des Kanals a gelangt das Datenausgangssignal des Kanals a von dem Band B über die Köpfe 1/3, den Wiedergabeverstärker ra und die Verzögerungseinheit V zum Ausgangspunkt. Während der Wiedergabe des Kanals b gelangen die Signale von dem Band B über die Köpfe 2/4 und den Wiedergabeverstärker ra zum Datenausgang des Kanals b. Die Verzögerungseinheiten V sind bei Aufnahme und Wiedergabe verschiedenen Kanälen zugeordnet. Wenn beide Funktionen nicht gleichzeitig notwendig sind, kann die Verzögerungseinheit V auch einfach vorhanden sein und jeweils zwischen den Kanälen, bzw. jeweils in die Aufnahme - bzw. Wiedergabeelektronik eingeschaltet werden.

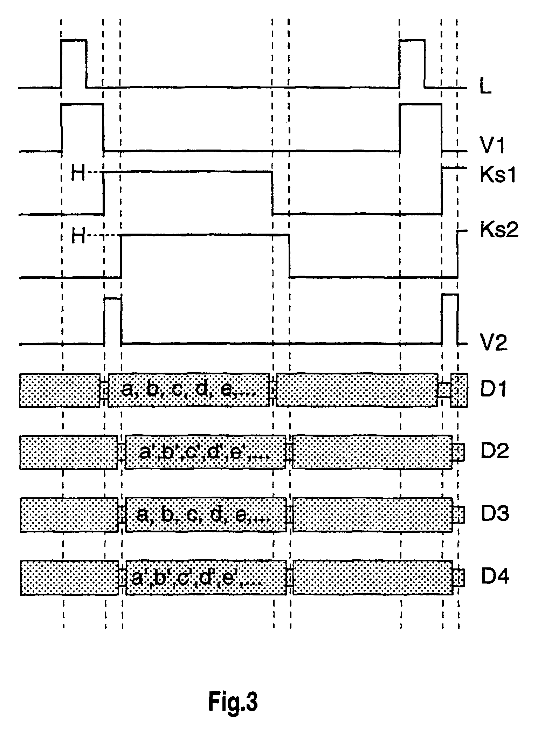

Fig. 3 zeigt das sich ergebende Signalschema nach erfolgter Einstellung. Die Datensignale D1 bzw.D2 sind direkt gelesene Signale am Ausgang out der Wiedergabeverstärker ra. Hierbei ist das Datensignal D1 den Köpfen 1/3 des Kanal a zugeordnet und das Datensignal D2 den Köpfen 2/4 des Kanals b. Die in den Datensignalen 1/2 mit "a,b,c,..." bzw "a',b',c'..." bezeichneten Abschnitte verdeutlichen zusammengehörige Datenpakete, die auf zwei Kanäle verteilt wurden. Die Vorderflanke des Lagengeberimpulses L startet die Verzögerung V1, nach deren Ablauf ein Kopf des Kanals a mechanisch in das Band eingetaucht ist. Dieser Kopf wird geschaltet mit dem H-Signal des Kopfschaltsignales K1. Gleichzeitig wird die Verzögerung V2 gestartet, nach deren Ablauf ein Kopf des Kanals b mechanisch in das Band eingetaucht ist, der mit dem H-Signal des Kopfschaltsignales K2 ausgewählt wird. Die Verzögerung V2 gibt den Versatz der Kopfschaltsignale zueinander an und ist gleichzeitig das Maß für die Kanalverzögerung. Die Datensignale 3 bzw. 4 stellen die zeitkorrigierten Ausgangssignale dar.

Die Messung der bei Wiedergabe eines normgerechten Signals zwischen den Kanälen auftretenden Verzögerung V2 bekannter Signale oder Signalübergänge wird in einer anderen Ausführung der Erfindung zum Ermitteln der notwendigen Kanal- und Kopfschaltsignalverzögerungswerte genutzt.

## Patentansprüche

1. Aufzeichnungs- und Wiedergabeverfahren nach dem Schrägspurverfahren für digitale Magnetbandrecorder mit parallelen Kanälen (a, b) und zugehörigen Schreib/Leseköpfen (1 - 4), unter Verwendung von zwei Köpfen (1, 3; 2, 4) pro Kanal (a; b), wobei zwischen den zwei Köpfen (1, 3; 2, 4) eines Kanals (a; b) mittels eines Kopfschaltsignales (K1, K2) umgeschaltet wird und Köpfe (1, 3; 2, 4) verschiedener Kanäle (a; b) einen geometrischen Versatz zueinander beim Eintauchen in ein Band (B) aufweisen, **dadurch gekennzeichnet, daß** zur zeitlichen Korrektur beim Lesen und Schreiben der Kanäle die Verzögerungszeit (V2) zwischen den Kopfschaltsignalen (K1, K2) der Kanäle (a; b) benutzt wird, indem bei der Signalaufzeichnung die Daten des nachlaufenden Kopfes um diese Verzögerungszeit (V2) verzögert werden, und bei der Signalwiedergabe die Daten des zuerst in das Band eintauchenden Kopfes um diese Verzögerungszeit (V2) verzögert werden, damit die Daten parallel zum Auslesen zur Verfügung stehen.

2. Verfahren nach Anspruch 1, **dadurch gekennzeichnet, daß** eine Verzögerungseinheit (V) je nach Betriebsart in den Kanal eingeschaltet wird, dessen Signal verzögert werden muß.

3. Verfahren nach Anspruch 1, **dadurch gekennzeichnet, daß** die Verzögerungszeit (V2) einmalig mit Hilfe eines Referenzbandes ermittelt wird.

4. Verfahren nach Anspruch 2, **dadurch gekennzeichnet, daß** die Umschaltung der Verzögerungseinheit (V) mit allen Takt-, Eingangs- und Ausgangssignalen über Multiplexer erfolgt, die von einem Servo des Magnetbandgerätes gesteuert werden.

5. Magnetbandgerät welches das Aufzeichnungs- und Wiedergabeverfahren nach Anspruch 1 durchführt.

## Claims

1. Recording and reproduction method according to the helical-scan method for digital magnetic tape recorders with parallel channels (a, b) and associated read/write heads (1 - 4), using two heads (1, 3; 2, 4) per channel (a; b), a changeover being made between the two heads (1, 3; 2, 4) of a channel (a; b) by means of a head switching signal (K1, K2) and heads (1, 3; 2, 4) of different channels (a; b) having a geometrical offset with respect to one another when descending into a tape (B), **characterized in that**, for temporal correction during the reading and writing of the channels, the delay time (V2) between the head switching signals (K1, K2) of the channels (a; b) is used as follows: the data of the trailing head are delayed by the said delay time (V2) during signal recording and the data of the head that descends into the tape first are delayed by the said delay time (V2) during signal reproduction, in order that the data are available in parallel for read-out.

2. Method according to Claim 1, **characterized in that**, depending on the operating mode, a delay unit (V) is connected into the channel -whose signal has to be delayed.

3. Method according to Claim 1, **characterized in that** the delay time (V2) is determined once with the aid of a reference tape.

4. Method according to Claim 2, **characterized in that** the changeover of the delay unit (V) is effected with all clock, input and output signals via multiplexers which are controlled by a servo of the magnetic tape apparatus.

5. Magnetic tape apparatus which carries out the recording and reproduction method according to Claim 1.

## Revendications

1. Méthode d'enregistrement et de reproduction conforme au procédé d'enregistrement par défilement hélicoïdal pour enregistreur numérique à bande magnétique doté de canaux parallèles (a, b) et de têtes d'écriture/de lecture associées (1 - 4 ) et utilisant deux têtes (1, 3 ; 2, 4) par canal, où une commutation est effectuée entre les deux têtes (1, 3 ; 2, 4) d'un canal (a ; b) à l'aide d'un signal de commutation de tête (K1, K2) et les têtes (1, 3 ; 2, 4) des différents canaux (a ; b) présentent un décalage lors de la descente sur une bande B, **caractérisée en ce que** la durée de temporisation (V2) entre les signaux de commutation de tête (K1, K2) des canaux (a ; b) est utilisée à des fins de correction temporelle lors de la lecture et de l'écriture des canaux via la temporisation des données de la tête suivante à hauteur de cette durée de temporisation (V2) au cours de l'enregistrement de signal et la temporisation des données de la première tête descendue sur la bande à hauteur de cette durée de temporisation (V2) lors de la reproduction de signal, de sorte que les données soient disponibles parallèlement à l'extraction.

2. Méthode conforme à la revendication 1, **caractérisée en ce que,** en fonction du mode de fonctionnement, une unité de temporisation (V) est intégrée au canal dont le signal doit être temporisé.

3. Méthode conforme à la revendication 1, **caractérisée en ce que** la durée de temporisation (V2) est calculée une fois à l'aide d'une bande de référence.

4. Méthode conforme à la revendication 2, **caractérisée en ce que** la commutation de l'unité de temporisation (V) s'effectue à l'aide de tous les signaux d'horloge, d'entrée et de sortie via des multiplexeurs dirigés par une commande de l'enregistreur à bande magnétique.

5. Enregistreur à bande magnétique qui exécute le procédé d'enregistrement et de reproduction conformément à la revendication 1.
